(19) **Europäisches Patentamt**

**European Patent Office**

**Office européen des brevets**

(11) Veröffentlichungsnummer: **0 339 191 B1**

(12) # EUROPÄISCHE PATENTSCHRIFT

(45) Veröffentlichungstag der Patentschrift: **19.01.94**

(51) Int. Cl.⁵: **G01D 3/02**

(21) Anmeldenummer: **89102229.5**

(22) Anmeldetag: **09.02.89**

---

(54) **Einrichtung zur Verringerung eines Fehlers eines Messumformers.**

---

(30) Priorität: **26.03.88 DE 3810456**

(43) Veröffentlichungstag der Anmeldung:
**02.11.89 Patentblatt 89/44**

(45) Bekanntmachung des Hinweises auf die
Patenterteilung:
**19.01.94 Patentblatt 94/03**

(84) Benannte Vertragsstaaten:
**DE FR GB**

(56) Entgegenhaltungen:
**DE-A- 3 508 610**
**GB-A- 2 063 560**
**US-A- 3 759 093**

(73) Patentinhaber: **HOTTINGER BALDWIN MESS-TECHNIK GMBH**
**Postfach 10 01 51**
**D-64201 Darmstadt(DE)**

(72) Erfinder: **Schlachter, Werner, Dipl.-Ing.**
**Haydnweg 40**
**D-6100 Darmstadt(DE)**

(74) Vertreter: **Brandt, Ernst-Ulrich, Dipl.-Phys.,**
**Dipl.-Ing.**
**Hottinger Baldwin Messtechnik GmbH**
**Patentabteilung**
**Postfach 10 01 51**
**D-64201 Darmstadt (DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zur Verringerung eines Fehlers eines Meßumformers mit auf dem Umformerkörper angeordneten, zu einer Meßbrücke verschalteten Dehnungsmeßstreifen-Anordnungen nach dem Oberbegriff des Patentanspruchs 1.

Bei dem aus der Veröffentlichung "J. Dorsey, HOMEGROWN STRAIN GAGE TRANSDUCERS, 1976" bekannten Umformer umfassen Dehnungsmeßstreifen-Anordnungen in Brückenzweigen einen Dehnungsmeßstreifen und einen in Reihe geschalteten abgleichbaren Widerstand. Die Widerstände weisen leiterartige, kurzgeschlossene Strukturen auf, wobei durch Auftrennen von Kurzschlußbrücken zur Fehlerverringerung erforderliche Widerstandswerte in Brückenzweige eingeschaltet werden können. Mit einem derartigen Verfahren ist nur ein begrenzter Kreis verschiedener Fehler verringerbar, so sind beispielsweise Kriechfehler und Verformungsfehler aufgrund nicht idealer Krafteinleitung mit diesem Verfahren nicht abgleichbar bzw. verringerbar.

Aus der US-A-3 759 093 ist eine Einrichtung zur Verringerung eines Fehlers eines Meßumformers mit auf dem Umformerkörper angeordneten, zu einer Meßbrücke geschalteten Dehnungsmeßstreifen-Anordnungen bekannt, bei der zwischen einer ersten Anschlußstelle der Meßbrücke und jeweils einer weiteren Anschlußstelle eine wenigstens zwei Anordnungs-Abschnitte umfassende Dehnungsmeßstreifen-Anordnung vorgesehen ist. Eine Dehnungsmeßstreifen-Anordnung weist einen nicht-linearen Dehnungsmeßstreifen auf, der auf dem sich verformenden Abschnitt des Umformerkörpers angebracht ist, während die weitere Dehnungsmeßstreifen-Anordnung einen nicht-linearen Dehnungsmeßstreifen aufweist, dem ein Trimmpotentiometer parallel geschaltet ist und der auf einem sich nicht verformenden Abschnitt des Umformerkörpers angebracht ist. Mit dieser Anordnung läßt sich die Nichtlinearität des Ausgangssignals der Einrichtung kompensieren.

Der Erfindung liegt deshalb die Aufgabe zugrunde, eine Einrichtung in Vorschlag zu bringen, welche zum Abgleich bzw. zur Verringerung einer Vielzahl von Fehlereinflüssen, die bei einem Meßumformer auftreten können, geeignet ist.

Diese Aufgabe wird erfindungsgemäß mit den Merkmalen des Patentanspruchs 1 gelöst. Dehnungsmeßstreifen-Anordnungen in zwei benachbarten Brückenzweigen werden über einen im Verlauf der jeweiligen Dehnungsmeßstreifen-Anordnung vorgesehenen Anschlußpunkt unter Zwischenschaltung eines einstellbaren Widerstandes miteinander verbunden und der Widerstand so eingestellt, daß der Einfluß der durch die Anschlußpunkte definierten Anordnungs-Abschnitte auf das Meßergebnis eine Fehlerverringerung bewirkt. Es lassen sich Fehlereinflüsse auf einfachste Weise dadurch wirkungsvoll verringern bzw. ganz beseitigen, daß der Widerstandswert eines Widerstandes, der auch entfernt von der Brückenschaltung angeordnet sein kann, eingestellt wird. Mit dieser Einstellung wird der Einfluß von Dehnungsmeßstreifen-Anordnungen in Brückenzweigen auf das Ausgangssignal in der gewünschten Weise eingestellt; beispielsweise kann bei Dehnungsmeßstreifen-Anordnungen mit jeweils zwei hintereinandergeschalteten Dehnungsmeßstreifen-Abschnitten oder einem Dehnungsmeßstreifen- und einem Widerstandsabschnitt der Einfluß bestimmter Anordnungs-Abschnitte dieser Anordnungen auf das Ausgangssignal bei Bedarf verringert oder vergrößert werden. Diese Einstellung kann vorgenommen werden, ohne daß die Brücke in nennenswertem Umfang verstimmt wird.

Es ist besonders vorteilhaft, die Anordnungs-Abschnitte so auszulegen, daß jeweils gegenläufige Fehlereinflüsse bewirkt werden.

Einen konstanten Ausgangswiderstand erhält man bei einer Einrichtung nach den Merkmalen des Patentanspruchs 2, was sich insbesondere bei der Parallelschaltung mehrerer Aufnehmer als vorteilhaft erweist. Ferner bleibt die Meßempfindlichkeit des Umformers im wesentlichen unverändert.

Günstig für die Bestimmung der Fehlereinflüsse ist eine Ausgestaltung nach den Merkmalen des Patentanspruchs 3. Es kann vorgesehen werden, daß die Widerstandswerte der zweiten und dritten Dehnungsmeßstreifen temperaturabhängig sind.

Zweckmäßig ist ferner eine Ausgestaltung, bei der zweiter bzw. dritter Dehnungsmeßstreifen in unterschiedlicher geometrischer Ausgestaltung zum ersten bzw. vierten Dehnungsmeßstreifen ausgebildet sind.

Ferner ist vorgesehen, daß erster und zweiter Dehnungsmeßstreifen bzw. dritter und vierter Dehnungsmeßstreifen zueinander gegenläufige Eigenschaften und/oder Kenngrößen aufweisen, insbesondere zueinander gegenläufige Kriechfehler, da so die Beeinflussung in Richtung positiven und negativen Kriechens möglich ist.

Zweckmäßig ist eine Weiterbildung der Erfindung, bei der vorgesehen ist, daß der einstellbare Widerstand entfernt von der Meßbrücke angeordnet ist; die Einstellung kann dabei an einer leicht zugänglichen Stelle des Umformers vorgenommen werden.

Zweckmäßig ist eine Anordnung der Dehnungsmeßstreifen nach Anspruch 9.

Bewährt hat sich eine Ausgestaltung, bei der Widerstandswert des einstellbaren Widerstandes gestuft einstellbar ist und sein Anfangswiderstandswert nicht größer ist als die Summe der Widerstandswerte des zweiten und dritten Dehnungsmeßstreifens.

Fertigungsgünstig, insbesondere bei einer Serienfertigung, ist eine Ausführungsform, bei der der einstellbare Widerstand als trimmbarer Folienwiderstand auf dem Umformerkörper, vorzugsweise auf der gemeinsamen Trägerfolie der Dehnungsmeßstreifen, angeordnet ist.

In einer Weiterbildung ist vorgesehen, daß der Widerstandswert des einstellbaren Widerstandes temperaturabhängig ist.

Die Zeichnung zeigt Ausführungsformen von zur Durchführung des erfindungsgemäßen Verfahrens geeigneten Einrichtungen, anhand derer das Verfahren näher erläutert wird. Es zeigen:

Fig. 1:     das Schaltbild eines Meßumformers mit in einer Vollbrücke geschalteten Dehnungsmeßstreifen-Anordnungen,

Fig. 2:     eine Einrichtung zur Verringerung des Einflusses von Fehlbelastungen eines Meßumformers,

Fig. 3:     eine Einrichtung zur Verringerung des Kriechfehlers bzw. des temperaturabhängigen Kriechfehlers eines Meßumformers.

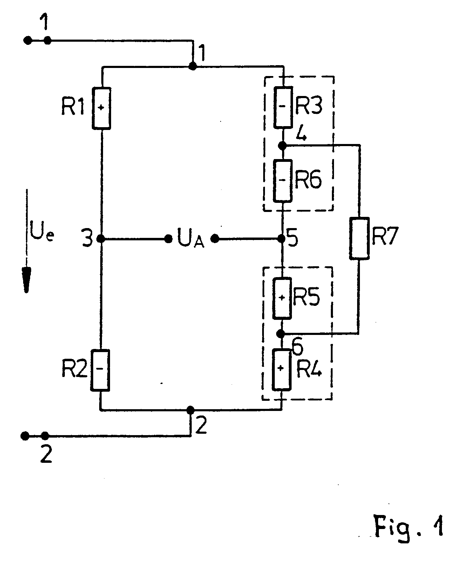

Die Fig. 1 zeigt vier zu einer Vollbrücke (Wheatstone'sche Brücke) verschaltete Dehnungsmeßstreifen-Anordnungen, die jeweils in einem Brückenzweig der Vollbrücke zwischen Anschlußstellen 1, 2, 3 und 5 angeordnet sind. Die erste Dehnungsmeßstreifen-Anordnung umfaßt den Dehnungsmeßstreifen R1, der zwischen einem Eingangsanschluß 1 und einem Ausgangsanschluß 3 angeordnet ist; die zweite Dehnungsmeßstreifen-Anordnung, der Dehnungsmeßstreifen R2, ist im benachbarten Brückenzweig zwischen dem Ausgangsanschluß 3 und dem zweiten Eingangsanschluß 2 angeordnet. Die dritte Dehnungsmeßstreifen-Anordnung zwischen dem Eingangsanschluß 1 und dem zweiten Ausgangsanschluß 5 umfaßt die Dehnungsmeßstreifen R3 und R6, während die vierte Dehnungsmeßstreifen-Anordnung zwischen dem Ausgangsanschluß 5 und dem Eingangsanschluß 2 die Dehnungsmeßstreifen R4 und R5 umfaßt. Zwischen den Eingangsanschlüssen 1 und 2 liegt die Versorgungsspannung $U_e$ an, während zwischen den Ausgangsanschlüssen 3 und 5 die Ausgangsspannung $U_A$ abgegriffen werden kann. Die bezüglich der Darstellung in Fig. 1 rechte Halbbrücke weist also in jedem der benachbarten Brückenzweige 1-5 und 2-5 zwei hintereinandergeschaltete Dehnungsmeßstreifen-Abschnitte R3 und R6 bzw. R4 und R5 auf. Zwischen den hintereinandergeschalteten Dehnungsmeßstreifen-Abschnitten R3 und R6 bzw. R4 und R5 sind Anschlußpunkte 4 und 6 angeordnet. Mit den Anschlußpukten 4 und 6 ist jeweils ein Ende eines einstellbaren Widerstandes R7 verbunden, der die Dehnungsmeßstreifen R5 und R6 sowie den Ausgangsanschluß 5 überbrückt.

Der Widerstandswert des Widerstandes R7 ist einstellbar; durch Vergrößern des Widerstandswertes ($R \to \infty$) von R7 wird die Wirkung der Dehnungsmeßstreifen R5 und R6 auf die Ausgangsspannung $U_A$ verstärkt, während durch Verringern des Widerstandswertes ($R \to 0$) von R7 der Einfluß der Dehnungsmeßstreifen R3 und R4 auf die Ausgangsspannung $U_A$ verstärkt wird. Durch eine entsprechende Einstellung des Widerstandswertes des Widerstandes R7 lassen sich Fehler des Umformers verringern bzw. kompensieren.

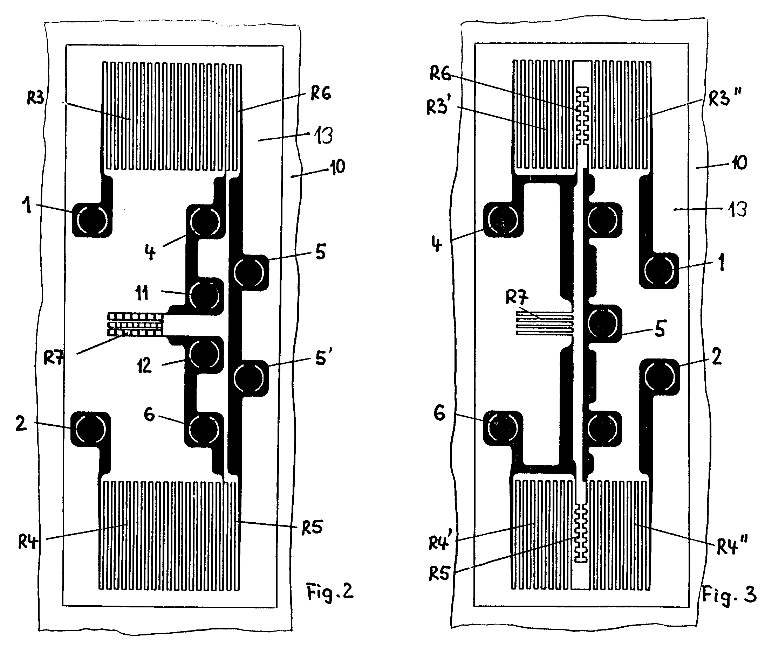

In Fig. 2 ist eine Einrichtung dargestellt, die prinzipiell nach der Darstellung in Fig. 1 geschaltet ist und mit der der Fehler infolge einer nicht idealen Beaufschlagung des Umformers verringert werden kann. Bei Verlagerung des Kraftangriffspunktes wird der Verformungsmechanismus des Umformerkörpers 10 in nicht mehr kontrollierbarer Weise beeinflußt. Dies gilt auch für zusätzliche Kraftkomponenten, die nicht in Meßrichtung wirken. Zur Fehlerverringerung sind neben dem Widerstand R7 in den Brückenzweigen 1-5 bzw. 2-5 geschaltete, auf dem Umformerkörper 10 aufgebrachte Dehnungsmeßstreifen-Anordnungen R3 und R6 bzw. R4 und R5 vorgesehen, mit denen der Mittelpunkt der Gittergeometrie des wirksamen Teils der Dehnungsmeßstreifen gegenüber dem Umformerkörper 10 scheinbar verschoben werden kann, wodurch die Empfindlichkeit des Meßumformers gegenüber einer nicht idealen Krafteinleitung oder einer nicht idealen Plazierung der Dehnungsmeßstreifen verringert wird. Die Dehnungsmeßstreifen R3 und R4 weisen Anschlußstellen 1 und 4 bzw. 2 und 6 auf. Die Anschlußpunkte 4 und 6 sind mit Anschlußstellen 11 und 12 des einstellbaren Widerstandes R7 verbunden. Den Dehnungsmeßstreifen R3 und R4 sind jeweils Dehnungsmeßstreifen R5 und R6 nachgeschaltet, die im Beispiel die Anschlußstellen 5 oder 5' als Ausgangsanschlüsse aufweisen. Mit der Einstellung des Widerstandswertes R7 lassen sich die Gittergeometrieeinflüsse der Dehnungsmeßstreifen-Abschnitte R3, R6 und R4, R5 auf äußerst wirksame Weise verändern und die Fehlerempfindlichkeit des Meßumformers in Hinsicht auf eine nicht ideale Beaufschlagung verringern.

Der einstellbare Widerstand R7 ist im dargestellten Beispiel als Folienwiderstand ausgeführt, der auf dem im wesentlichen nicht verformten Teil des Umformerkörpers 10 angeordnet ist und dessen Widerstandswert durch Auftrennen von Stegen bzw. abrasives Bearbeiten verändert werden kann. Die Dehnungsmeßstreifen R3 bis R6 und der einstellbare Widerstand R7 haben eine gemeinsame Trägerfolie 11 zur Anordnung auf dem Umformerkörper 10.

Mit der Einrichtung nach Fig. 3 läßt sich der Kriechfehler bzw. ein temperaturabhängiger Kriechfehler eines Umformers verringern. Mit Kriechen wird die Änderung des Umformersignals über die Zeit bei gleichbleibender Belastung bezeichnet. Im allgemeinen stellt sich nach einer durch eine Belastung bewirkten Dehnung bei konstant gehaltener Belastung eine Zunahme der Dehnung des Umformerkörpers (positives Kriechen) ein, während die Dehnung des Dehnungsmeßstreifen-Gitters bei konstanter Belastung zurückgeht (negatives Kriechen). Das Kriechen eines Dehnungsmeßstreifen ist im wesentlichen abhängig von der Zahl und Ausgestaltung der Umkehrstellen des Dehnungsmeßstreifens. Das Kriechen des Umformers ist als Überlagerung des Kriechens von Umformerkörper 10 und Dehnungsmeßstreifen zu betrachten. Zur Kriechfehlerverringerung sind in benachbarten Brückenzweigen 1-5 und 2-5 geschaltete, auf dem Umformerkörper 10 angeordnete Dehnungsmeßstreifen-Anordnungen R3', R3" und R6 sowie R4', R4" und R5 und der an den Anschlußpunkten 4 und 6 angeschlossene einstellbare Widerstand R7 vorgesehen; die Dehnungsmeßstreifen-Anordnung R3 setzt sich dabei aus den hintereinandergeschalteten, räumlich beabstandet angeordneten Dehnungsmeßstreifen R3' und R3" zusammen, während R4 durch R4' und R4" gebildet ist. Alle Dehnungsmeßstreifen der Meßbrücke sind ebenso wie der einstellbare Widerstand R7 in Folientechnik ausgeführt, auf einer Trägerfolie 13 angeordnet und auf dem Umformerkörper 10 durch Kleben appliziert. Die Dehnungsmeßstreifen-Abschnitte R3', R3" und R4', R4", die wie die Dehnungsmeßstreifen R3 und R4 in der Fig. 1 in der Meßbrücke angeordnet sind, sind als lange, schlanke Mäander geformt, die positives Kriechen aufweisen. Die Dehnungsmeßstreifen-Abschnitte R5 und R6 sind als kurze, eine hohe Anzahl von Umkehrstellen aufweisende Mäander ausgebildet, was ein negatives Kriechen zur Folge hat. Mit der Einstellung des Widerstandes R7 lassen sich die Kriechfehlereinflüsse der Dehnungsmeßstreifen-Anordnungen auf das Ausgangssignal $U_A$ in einfacher und wirksamer Weise einstellen.

Eine erprobte Ausführungsform weist folgende Widerstandswerte auf: R3 = R4; R5 = R6; R3 + R5 = R1; Anfangswiderstand von R7 nicht größer, vorzugsweise kleiner als R5 + R6. Zur Verringerung eines temperaturabhängigen Kriechfehlers kann der einstellbare Widerstand R7 als temperaturabhängiger Widerstand ausgebildet sein.

Um einen größeren Abgleichbereich zu verwirklichen oder einen Grob- und Feinabgleich vornehmen zu können, kann die linke Halbbrücke in Fig. 1 wie die rechte Halbbrücke ausgebildet werden, wobei die Widerstandswerte zwecks Grob- und Feinabgleich gegebenenfalls geeignet zu wählen sind. Auch kann die eine Halbbrücke zur Verringerung des Kriechfehlers und die andere Halbbrücke zur Verringerung des Fehlbelastungsfehlers ausgestaltet sein.

Die in Fig. 1 dargestellte prinzipielle Anordnung der Anordnungs-Abschnitte bzw. der Dehnungsmeßstreifen R5 und R6 und des einstellbaren Widerstandes R7 kann vorteilhaft auch zur Verringerung von temperaturabhängigen Fehlern eingesetzt werden.

## Patentansprüche

1. Einrichtung zur Verringerung eines Fehlers eines Meßumformers mit auf dem Umformerkörper (10) angeordneten, zu einer Meßbrücke geschalteten Dehnungsmeßstreifen-Anordnungen, bei der zwischen einer ersten Anschlußstelle (5) der Meßbrücke und jeweils einer weiteren Anschlußstelle (1, 2) eine wenigstens zwei Anordnungs-Abschnitte (R3, R6 bzw. R4, R5) umfassende Dehnungsmeßstreifen-Anordnung vorgesehen ist, dadurch gekennzeichnet, daß zwischen den Anordnungs-Abschnitten (R3, R6 bzw. R4, R5) jeder Dehnungsmeßstreifen-Anordnung ein Anschlußpunkt (4 bzw. 6) vorgesehen ist, und daß ein einstellbarer Widerstand (R7) einerseits mit dem Anschlußpunkt (4 oder 6) der einen Dehnungsmeßstreifen-Anordnung und andererseits mit dem Anschlußpunkt (6 oder 4) der anderen Dehnungsmeßstreifen-Anordnung verbunden ist.

2. Einrichtung nach Anspruch 1, dadurch gekennzeichnet, daß die erste Anschlußstelle ein Ausgangsanschluß (5) der Meßbrücke ist und die weiteren Anschlußstellen die beiden Eingangsanschlüsse (1, 2) sind, daß zwischen dem Ausgangsanschluß (5) und dem ersten Eingangsanschluß (1) ein erster und ein zweiter Dehnungsmeßstreifen (R3, R6) hintereinandergeschaltet sind, und daß zwischen dem Ausgangsanschluß (5) und dem zweiten Eingangsanschluß (2) ein dritter und ein vierter Dehnungsmeßstreifen (R5, R4) hintereinandergeschaltet sind.

3. Einrichtung nach Anspruch 2, dadurch gekennzeichnet, daß zweiter und dritter Dehnungsmeßstreifen (R6, R5) zu den restlichen Dehnungsmeßstreifen (R3, R4) der beiden benachbarten Brückenzweige unterschiedliche Eigenschaften und/oder Kenngrößen aufweisen.

4. Einrichtung nach Anspruch 3, dadurch gekennzeichnet, daß die Widerstandswerte der zweiten und dritten Dehnungsmeßstreifen (R6, R5) temperaturabhängig sind.

5. Einrichtung nach einem der vorhergehenden Ansprüche, dadurch gekennzeichnet, daß zweiter bzw. dritter Dehnungsmeßstreifen (R6, R5) in unterschiedlicher geometrischer Ausgestaltung zum ersten bzw. vierten Dehnungsmeßstreifen (R3, R4) ausgebildet sind.

6. Einrichtung nach einem der vorhergehenden Ansprüche, dadurch gekennzeichnet, daß erster und zweiter Dehnungsmeßstreifen (R3, R6) bzw. dritter und vierter Dehnungsmeßstreifen (R5, R4) zueinander gegenläufige Eigenschaften und/oder Kenngrößen aufweisen.

7. Einrichtung nach Anspruch 6, dadurch gekennzeichnet, daß erster und zweiter Dehnungsmeßstreifen (R3, R6) bzw. dritter und vierter Dehnungsmeßstreifen (R5, R4) zueinander gegenläufige Kriechfehler aufweisen.

8. Einrichtung nach einem der vorhergehenden Ansprüche, dadurch gekennzeichnet, daß der einstellbare Widerstand (R7) entfernt von der Meßbrücke angeordnet ist.

9. Einrichtung nach einem der vorhergehenden Ansprüche, dadurch gekennzeichnet, daß die Dehnungsmeßstreifen zumindest eines Brückenzweiges auf einer gemeinsamen Trägerfolie (13) angeordnet sind.

10. Einrichtung nach einem der vorhergehenden Ansprüche, dadurch gekennzeichnet, daß der Widerstandswert des einstellbaren Widerstandes (R7) gestuft einstellbar ist und sein Anfangswiderstandswert nicht größer ist als die Summe der Widerstandswerte des zweiten und dritten Dehnungsmeßstreifens (R5, R6).

11. Einrichtung nach einem der vorhergehenden Ansprüche, dadurch gekennzeichnet, daß der einstellbare Widerstand (R7) als trimmbarer Folienwiderstand auf dem Umformerkörper (10) angeordnet ist.

12. Einrichtung nach einem der vorhergehenden Ansprüche, dadurch gekennzeichnet, daß der Widerstandwert des einstellbaren Widerstandes (R7) temperaturabhängig ist.

13. Einrichtung nach einem der vorhergehenden Ansprüche, dadurch gekennzeichnet, daß die Dehnungsmeßstreifen der beiden benachbarten Brückenzweige auf einer gemeinsamen Trägerfolie (13) angeordnet sind.

14. Einrichtung nach einem der vorhergehenden Ansprüche, dadurch gekennzeichnet, daß der einstellbare Widerstand (R7) als trimmbarer Folienwiderstand auf der gemeinsamen Trägerfolie (13) der Dehnungsmeßstreifen angeordnet ist.

**Claims**

1. Device for reducing an error of a measuring transducer having wire strain gauge arrangements which are disposed on the transducer body (10) and are connected to form a resistance bridge, in which a wire strain gauge arrangement comprising at least two arrangement sections (R3, R6 and R4, R5, respectively) is provided between a first connection point (5) of the resistance bridge and another connection point (1, 2) in each case, characterised in that a connection point (4 and 6) is provided between the arrangement sections (R3, R6 and R4, R5, respectively) of each wire strain gauge arrangement, and that an adjustable resistor (R7) is joined on one side to the connection point (4 or 6) of one wire strain gauge arrangement and on the other to the connection point (6 or 4) of the other wire strain gauge arrangement.

2. Device according to claim 1, characterised in that the first connection point is an output connection (5) of the resistance bridge and the other connection points are the two input connections (1, 2), that a first and a second wire strain gauge (R3, R6) are connected in series between the output connection (5) and the first input connection (1), and that a third and a fourth wire strain gauge (R5, R4) are connected in series between the output connection (5) and the second input connection (2).

3. Device according to claim 2, characterised in that the second and third wire strain gauges (R6, R5) have different properties and/or characteristic quantities to the remaining wire strain gauges (R3, R4) of the two adjacent bridge arms.

4. Device according to claim 3, characterised in that the resistance values of the second and third wire strain gauges (R6, R5) are temperature-dependent.

5. Device according to any one of the preceding claims, characterised in that the second and third wire strain gauges (R6, R5) have a different geometric form to the first and fourth wire strain gauges (R3, R4).

6. Device according to any one of the preceding claims, characterised in that the first and second wire strain gauges (R3, R6) and the third and fourth wire strain gauges (R5, R4) have properties and/or characteristic quantities which move in opposite directions to one another.

7. Device according to claim 6, characterised in that the first and second wire strain gauges (R3, R6) and the third and fourth wire strain gauges (R5, R4) have creep errors which move in opposite directions to one another.

8. Device according to any one of the preceding claims, characterised in that the adjustable resistor (R7) is disposed remotely from the resistance bridge.

9. Device according to any one of the preceding claims, characterised in that the wire strain gauges of at least one bridge arm are disposed on a common support sheet (13).

10. Device according to any one of the preceding claims, characterised in that the resistance value of the adjustable resistor (R7) can be adjusted in steps and its initial resistance value is no greater than the sum of the resistance values of the second and third wire strain gauges (R5, R6).

11. Device according to any one of the preceding claims, characterised in that the adjustable resistor (R7) is disposed as a trimmable film resistor on the transducer body (10).

12. Device according to any one of the preceding claims, characterised in that the resistance value of the adjustable resistor (R7) is temperature-dependent.

13. Device according to any one of the preceding claims, characterised in that the wire strain gauges of the two adjacent bridge arms are disposed on a common support sheet (13).

14. Device according to any one of the preceding claims, characterised in that the adjustable resistor (R7) is disposed as a trimmable film resistor on the common support sheet (13) of the wire strain gauges.

**Revendications**

1. Dispositif pour réduire la marge d'erreur d'un transducteur de mesure comprenant des agencements de jauges de contrainte montés sur le corps (10) du transducteur et raccordés pour former un pont de mesure, dans lequel sont prévus entre une première position de jonction (5) du pont de mesure et respectivement une autre position de jonction (1, 2) au moins deux sections d'agencements de jauges de contrainte (R3, R6 ou R4, R5), caractérisé en ce qu'entre les sections (R3, R6 ou R4, R5) de chaque agencement de jauges de contrainte est prévu un point de jonction (4 ou 6), et en ce qu'une résistance réglable (R7) est reliée d'une part au point de jonction (4 ou 6) d'un agencement de jauges de contrainte et d'autre part au point de jonction (6 ou 4) de l'autre agencement de jauges de contrainte.

2. Dispositif selon la revendication 1, caractérisé en ce que la première position de jonction est constituée par une borne de sortie (5) du pont de mesure et les autres positions de jonction sont constituées par les deux bornes d'entrée (1, 2), en ce qu'entre la borne de sortie (5) et la première borne d'entrée (1) sont montées l'une à la suite de l'autre une première et une seconde jauges de contrainte (R3, R6), et en ce qu'entre la borne de sortie (5) et la seconde borne d'entrée (2) sont montées l'une à la suite de l'autre une troisième et une quatrième jauges de contrainte (R5, R4).

3. Dispositif selon la revendication 2, caractérisé en ce que la seconde et la troisième jauges de contrainte (R5, R6) présentent par rapport aux autres jauges de contrainte (R3, R4) des deux branches voisines du pont des propriétés et/ou des grandeurs caractéristiques différentes.

4. Dispositif selon la revendication 3, caractérisé en ce que les valeurs de résistance des seconde et troisième jauges de contrainte (R6, R5) dépendent de la température.

5. Dispositif selon l'une quelconque des revendications précédentes, caractérisé en ce que la seconde ou la troisième jauges de contrainte (R6, R5) est constituée selon une constitution géométrique différente par rapport à la première ou à la quatrième jauge de contrainte (R3, R4).

6. Dispositif selon l'une quelconque des revendications précédentes, caractérisé en ce que la première et la seconde jauges de contrainte (R3, R6) ou la troisième et la quatrième jauges de contrainte (R5, R4) présentent des propriétés et/ou des grandeurs caractéristiques opposées.

7. Dispositif selon la revendication 6, caractérisé en ce que la première et la seconde jauges de contrainte (R3, R6) ou la troisième et la quatrième jauges de contrainte (R5, R4) présentent des erreurs de fluage en sens contraire.

8. Dispositif selon l'une quelconque des revendications précédentes, caractérisé en ce que la résistance réglable (R7) est montée à distance du pont de mesure.

9. Dispositif selon l'une quelconque des revendications précédentes, caractérisé en ce que les jauges de contrainte d'au moins une branche du pont sont disposées sur une feuille de support commune (13).

10. Dispositif selon l'une quelconque des revendications précédentes, caractérisé en ce que la valeur de la résistance réglable (R7) peut être réglée de façon discontinue, et en ce que sa valeur de résistance de début n'est pas supérieure à la somme des valeurs de résistance des seconde et troisième jauges de contrainte (R5, R6).

11. Dispositif selon l'une quelconque des revendications précédentes, caractérisé en ce que la résistance réglable (R7) est disposée sous forme d'une résistance à couche mince ajustable par découpe sur le corps (10) du transducteur.

12. Dispositif selon l'une quelconque des revendications précédentes, caractérisé en ce que la valeur de la résistance réglable (R7) dépend de la température.

13. Dispositif selon l'une quelconque des revendications précédentes, caractérisé en ce que les jauges de contrainte des deux branches voisines du pont sont montées sur une feuille de support commune (13).

14. Dispositif selon l'une quelconque des revendications précédentes, caractérisé en ce que la résistance réglable (R7) est montée sous forme d'une résistance à couche mince ajustable par découpe sur la feuille de support commune (13) des jauges de contrainte.

Fig. 1

EP 0 339 191 B1

Fig. 3

Fig. 2

9